**Europäisches Patentamt**

**European Patent Office**

**Office européen des brevets**

(11) Publication number: **0 286 598**
**A2**

## (12) EUROPEAN PATENT APPLICATION

(21) Application number: **88830010.0**

(22) Date of filing: **12.01.88**

(51) Int. Cl.⁴: **G 01 P 3/68**

(30) Priority: **14.01.87 IT 8280287**

(43) Date of publication of application:
**12.10.88 Bulletin 88/41**

(84) Designated Contracting States: **DE FR GB**

(71) Applicant: **Ugo, Licinio**
**Via Valdirivo 25**
**I-34132 Trieste TS (IT)**

(72) Inventor: **Ugo, Licinio**
**Via Valdirivo 25**
**I-34132 Trieste TS (IT)**

(74) Representative: **Zorzut, Ermenegildo**
**Studio Tecnico S.A.I. per. ind. ZORZUT ERMENEGILDO**
**Via Imbriani 2**
**I-34122 Trieste (IT)**

The title of the invention has been amended (Guidelines for Examination in the EPO, A-III, 7.3).

(54) **Opto-electronic system for determining direction and speed of a vehicle by emission of laser beams, and the simultaneous measurement of the rotation.**

(57) The explanations and descriptions contained in the present additional patent concern some improvements devised for the "optical-electronic system for determination of direction and speed of a vehicle by emission of an internal laser beam" for which two former patent applications, namely nr. 9/82810 A/84 of Sept. 19th 1984 and nr. 9/82809 A/86 of May 27th, 1986 were submitted by the same author, UGO Licinio (25, via Valdirivo, Trieste, Italy). The above-mentioned improvements are a series of structural changes of the optical system, similar to the one described in the two former patents, but resulting in a smaller size of the measuring instrument without any change in the performances reported in the two former descriptions. A proposal is also made to use such small-sized optical device contemporaneously for the detection and measurement of its possible rotations around the internal axis parallel to its straight motion.

By resorting to the Sagnac principle, therefore, the optical device used in order to determine the speed and direction of a vehicle in motion may thus include some performances as a laser gyroscope. A description is also made of further improvements of the optical device and the elctronic computer, achieved from a consequence of the Fitzgerald contraction principle that makes equal the time duration of the two forward and back, consecutive travels of a beam running once parallel and once perpendicular to the motion of a body, as demonstrated by the Michelson-Morley experiment. A blocks electric diagram is also described, with the changes introduced in order to improve the computering system, taking into account the new situations created by the various modifications aimed to obtain a possibility of measurements of straight speed and transverse rotations speed, even though the measuring instrument is remaining static.

Fig.12

## Description

## "IMPROVEMENTS OF THE OPTICAL-ELECTRONIC SYSTEM FOR DETERMINATION OF DIRECTION AND SPEED OF A VEHICLE BY EMISSION OF AN INTERNAL LASER BEAM, ALSO USED FOR THE CONTEMPORANEUS MEASUREMENT OF TRANSVERSAL ROTATIONS".

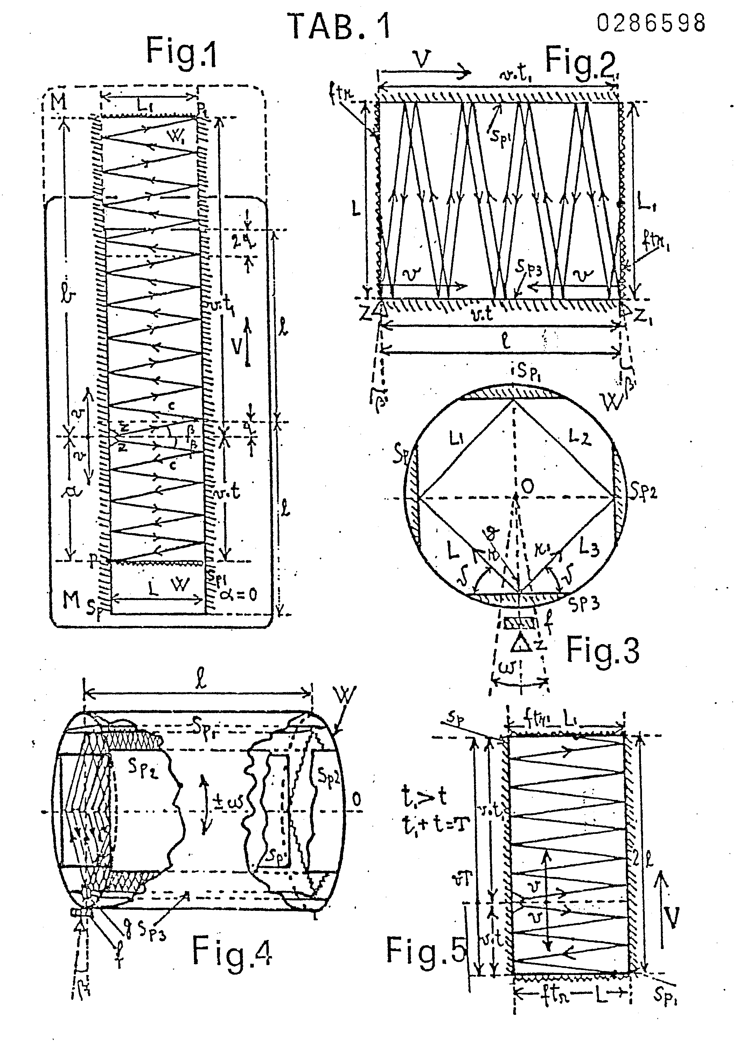

A full understanding of the improvements described requires the consultation of the patent applications nr. 9/82810 A/84 and 9/82809 A/86 submitted by the inventor of the present application and regarding the same subject. The description contained in the second patent (nr. 9/82809 A/86) may be sufficient in this respect, since it includes several changes introduced over the first partent (nr. 9/82810 A/84).The aim of the first modification to be introduced in the optical device of the system is the reduction of the size of the instrument. A basic representation of the latter is contained in table 1, fig. 1 of the present document. As the figure clearly shows, the laser beams are released from the centre of the container (W) in the direction of the two ends (L and $L_1$), obviously with the inclination $\beta = \beta_1$. Consequently, the apparent velocity of the light from the centre to the ends is kept equal by the reflections, in accordance with the formula $v = ctg\beta$. Clearly, if a laser beam does not proceed from the centre, as indicated in fig. 1, but from the two ends L and $L_1$, in opposite directions and with the same inclinations $\beta = \beta_1$, in an optical system of mirrors with an overall length reduced by 50% (as shown by "$\ell$" in fig. 2), the resulting situation is like the one created in the "$2\ell$" system shown in fig. 1. In this case, however, mirrors are reduced by a half and are simultaneously hit by both laser beams, though travelling in opposite direc tions, and so a simplification with remarkably valuable effects on costs is obtained. Obviously, the angles $\beta$ and $\beta_1$ must be equal. If there are any differences, the time data obtained (t and $t_1$) must be properly corrected on the basis of those obtained during calibration in order to make them compatible for the final calculation of V.

The laser beams thus reflecting on the same optical system of plane mirrors may therefore reduce the possibility of incorrect time readings deriving from factors related to possible slight costruction faults. Such modification does not affect the correct application on the new device of the principles of the original system of measurement, but it adds a new and important aspect to the network: the possibility of simultameous use of the instrument for a different type of measurement too. If we look at fig. 3, which shows the arrangement of mirrors inside the instruments (W) and we operate a beam dividing head (g) to emit from the laser (z) two rays of light ciruclating in opposite directions, what we obtain in an optical system like the one used by Sagnac in his intereromietre for the detection of rotations, from which today's so-called static laser gyroscopes derive. Such system may be used to detect and measure the $\omega$ rotations because in the so-called "empty" space light moves at a constant speed ("c") in all directions. Let us look at fig. 3 again: it clearly shows that the two light beams r and $r_1$ reflect on the mirrors sp, $sp_1$, $sp_2$, and $sp_3$

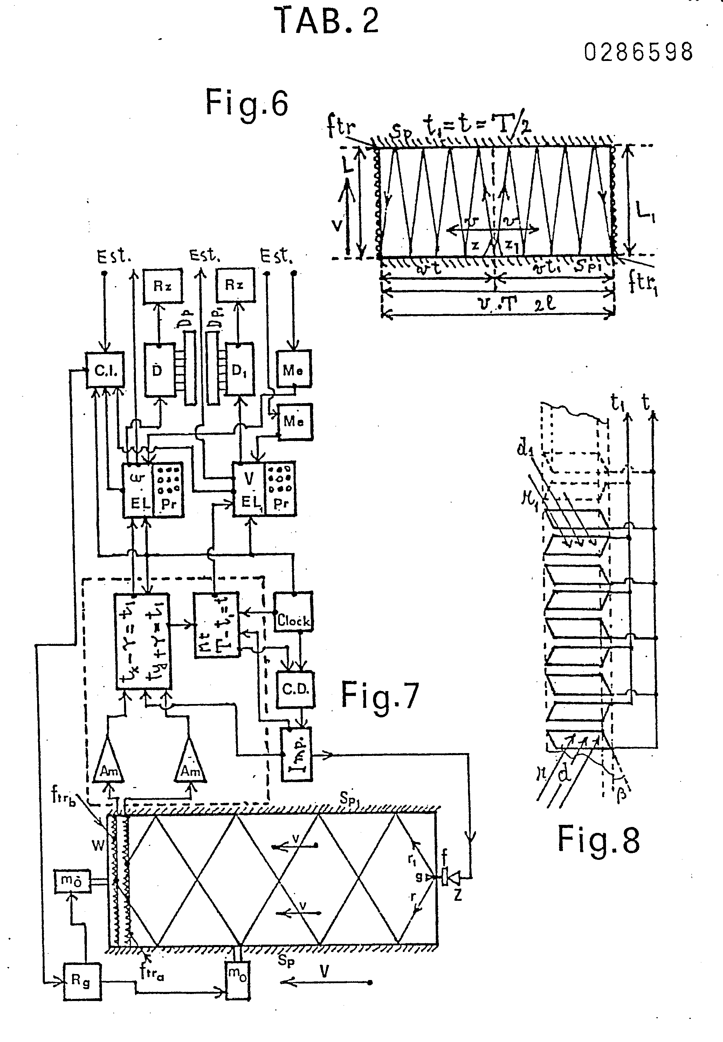

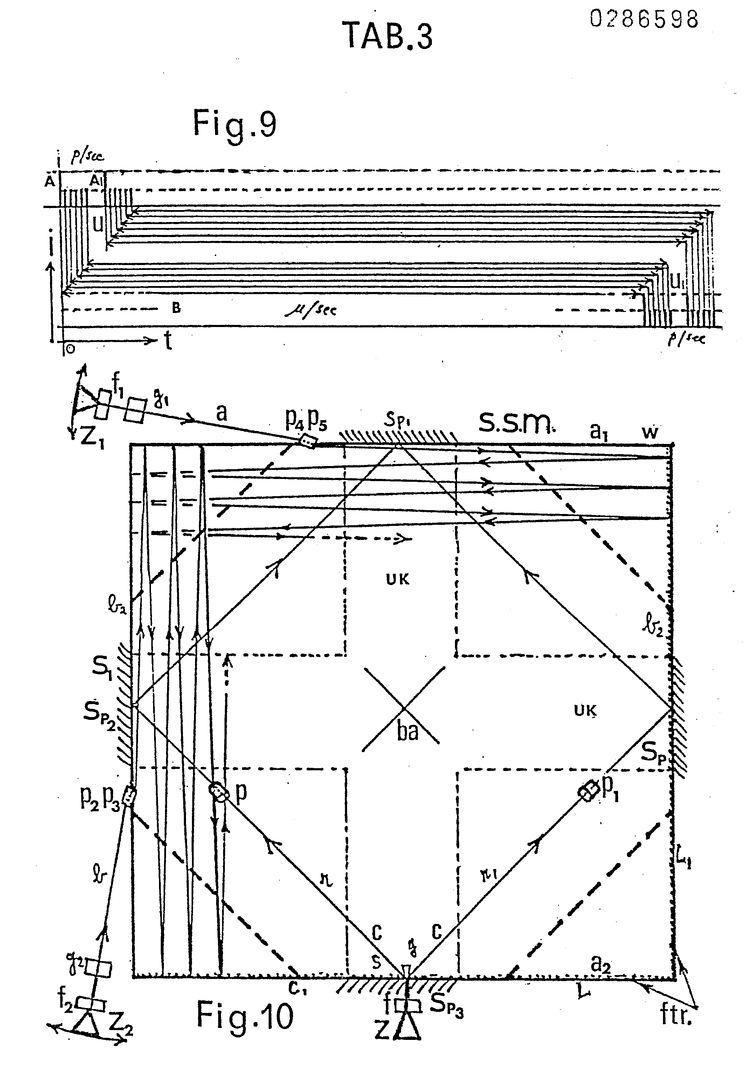

postioned in the container (W) at the correct angle ($\vartheta$) and are directed exactly back to their point of emission if the system keeps perfectly still in space. On the contrary, if the system rotates around the O axis in ei ther direction at the $\omega$ tangential velocity, the two light fronts reach the point of emission at different times. Such difference may be measured by means of an interferometre, observing the interference fringes if the laser light is continuous. If the $\omega$ velocity is low, the circuit necessary to detect the rotation must be rather large. It has already been demonstrated in the two patents remembered that a continuous straight motion can be measured in absolute terms by means of light. Clearly, it is also possible to measure any rotatory motion by comparing it with segments of light rays arranged in a closed circuit by means of reflecting mirrors. However, both Sagnac's interferometre and the optical circuit in fig. 3 are positioned on a single plane. Let us now consider fig. 4, showing a longitudinal section image of the container (W) of the same system represented in fig. 3. The optical circuit is the same, with the laser (z) divided into two beams of light by the dividing head (g). Here, as required by the velocimetre in question, owing to their beta inclination angle both the r and $r_1$ beams reflected on mirrors do not return to their point of emission but run from L to the opposite end ($L_1$), where photodetectors (ftr) are positioned. Owing to the displaced reflections, the number of basic circuits covered by the light beams increases in accordance with the angle. Thus, the system's indications can more easily be measured also with smaller circuits, and the sensitivity becomes "n" times greater, "n" being the number of closed reflection circuits covered by the light in the optical system. If the light emitted by z were continuos, we would once again require an interferometre, but since for the velocimetre, short light impulses are released by the laser at regular intervals in order to measure velocity, the same system may be used to measure the different times taken by r and $r_1$ to reach the photodetectors (ftr). In this case, what must be measured are times and not interference fringes, so that a rotation may be detected and evaluated, on the basis of the difference between two opposite movements of light, with the same system which is used for the determination of V, in the device described in the previous patents. The principle of the velocity meter is applied, with just one modification, in the emission laser, coupled with a beam dividing head and with a modification in the photodetector, which must be able to determine which of the two beams (r and $r_1$) returns in a shorter time, and consequently which is the sense of direction of the rotation. The photodetector on L must therefore be constructed as indicated in fig. 8, which shows some light-sensitive strips (s, $s_1$, $s_2$ and $s_n$) which are all inclined: at an "alpha" angle in the case of odd-numbered ones and

at an "alpha$_1$" angle for even-numbered ones (possibly $\alpha = \alpha_1$). Each strip is electrically isolated from the others. In order to create a direction selector which might distinguish between the light coming from two different directions "d" and "d$_1$", it is sufficient to create an electric connection between even-numbered strips and one between odd-numbered ones. The light sensor (L) is therefore divided into two separate photodetectors, each of which responds only to the stress of the light coming from a given direction as a consequences of the inclination of the photosensitive strips which are struck. Such separation of L into two photodetectors enables one to know which beam of light reaches its ftr more rapidly thus discovering the sense of direction of the rotation and the revative speed ($\omega$). This also gives the possibility of calculating the travelling speed. With an equipment of the size of the container (W) represented in fig. 9, table 2 patent nr. 9/82809 A/86 it is possible to detect and measure rotations with a W container external surface speed of 0.0001 m/sec (on the 0.4 mt. diametre). With such additional equipment, therefore, the optical device described in fig. 2 can detect rotations, determine the direction and measure the speed of a mobile body. Some static laser devices using optic fibres to measure rotations already exist, but they are not yet developed enough to replace inertial gyroscopes. Optic fibres fail to give reliable indications for two reasons: firstly because the solid medium, namely transparent glass, has some entrainment effect on the light flowing inside it, secondly because inside the optic fibres there is a high degree of scattering. The most constant and correct results may be obtained with laser light beams circuits, tidily propagated and reflected in the vacuum, particularly with the modified device which in the object of these patents. With such improvements, therefore, the device now has a far-reaching performance including a precise determination of direction and velocity of a mobile, as well as its rotation, independently of any external system of reference, such as optical detectors to be constantly pointed on outside. The only exception is the need to consider the motion which may be present or acquired at the starting moment of departure, that is the real point at which the relativ motion has been started. Such data inserted into the computer will modify of course the final results. It should be stressed that gravitational forces might somehow affect light propagation by modifying its trajectory, probably as a consequence of the change in speed ("c"). This, however, might happen only in very intense fields of gravity, able to cause dramatic modifications in' the space of the constants "$\varepsilon_0$" and "$\mu_0$", particularly around large masses of matter. Usually, however, such variations are so small that have virtually no effect on light velocity ("c"). In our portion of sidereal space which includes the solar system, and particulary in the area occupied by our planet, and maybe also in the interstellar and intragalactic space, the influence exerted by gravitational interactions on light velocity ("c") may be considered as virtually null. Obviously, this would not be the effect of large, concentrated masses, close to neutron stars or other celestial bodies, in farther sectors of space. Generally speaking, owing to the great distances between the bodies surrounding us, gravitational interactions of light are not detectable, and have, therefore, no effect on the results of our measurements. As a consequence of the structural changes introduced in the device in question, further modifications are required by the electric blocks diagram of the electronic computer, to make it suitable for the new requirements. Generally speaking no major changes should be necessary. However, the existence of a larger number of laser light circuits connecting the mirrors inside each container will increase the number of data collected by photodetectors and therefore the quantity of calculations. Before passing to the description of the electric blocks diagram, it is worth recalling that, whatever the position of the instrument (fig. 5 and 6) in relation to the travelling speed, $t$ and $t_1$ times of the $z$ and $z_1$ laser beams, summed together, give the same T value, as was indicated from the results of the experience of Michelson and Morley, as a consequence of the Fitzgerald-Lorenz contraction. The $t_1$ of a circuit of light travelling in the direction of V or the $t$ of a circuit of light travelling in the opposite direction might be calculed through the measurement of only one of them, because $T-t_1=t$ or, conversely, $T-t=t_1$ whereas $\frac{T}{2}$ should be measured with the instrument perpendicular to the motion V. In practice, therefore, it would be sufficient to measure only one of the time values, $t$ or $t_1$, after one single measurement of $\frac{T}{2}$, thus obtaining the other time value. It is worth stressing that the number of reflection between two opposite, parallel mirrors is given by the relation

$$\frac{\ell}{L.tg.\beta} = n$$

in a motionless condition and that with several pairs of parallel flat mirrors arranged in regular geometric figures

$$n_1 = \frac{\ell}{N.L.tg.\beta},$$

N being the number of sides of the figure, but T or $\frac{T}{2}$ may be determined in advance with the formula

$$\frac{T}{2} = \frac{\ell}{c.tg.\beta},$$

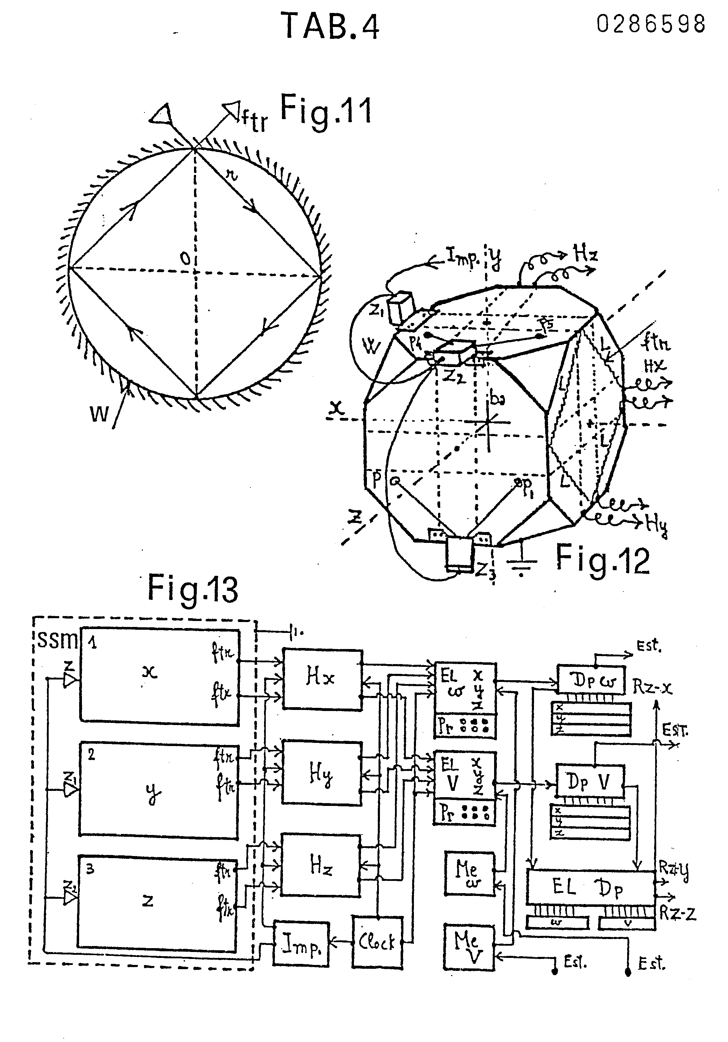

representing the theoretical time in a motionless state which may also be taken as a reference in the computer time calculation without needing any verification measurement. The instrument would therefore be simpler, and (see fig. 4) it would be equipped with only one two-way circuit with a beam dividing head (g) and possibly a transformation crystal (f) for the laser $\lambda$ reduction from 900 manometres to 3-400, through which all the data necessary to calculate the travelling speed and the rotation may be obtained. Obviously, owing to the re ciprocal interference of motions, the data $t_x$ and $t_y$ obtained through the photodetector in relation to the rotation must be used to determine the real time $t_1$ (or $t$) and must be analyzed after any possible variation of the direction of V in relation to the plane of rotation ($\omega$). With being both the time increase in the path of light on one side and in one direction and the decrease on the opposite side and direction, the result is $t_x - t_y = 2\tau$ or $t_x - \tau = t_1$ or $t_y + \tau = t_1$. The rotation ($\omega$) may be calculated on the basis of the difference in time $2\tau$, the diametre of the contaniner and the point from which the light is directed to the photodetector in relation to the circumference inscribed in the planes of the mirrors. An example of a possible, simplified electrical blocks diagram with all the modifications described is reported in fig. 7, which shows the container (W), the optical system of mirros (sp, $sp_1$, $sp_2$ and $sp_3$), the laser z with the beam-dividing reflecting prism (g) and the crystal frequency transformer (f). One of the bottom sides is equipped with the directional photodetectors (ftr and $ftr_1$), arranged continuosly along the sides (L). Fig. 4 shows the crossed laser beams, one oriented toward the left and one towards the right, describing some close, segmented paths as a result of the reflections on the four flat mirrors. At the ends of the photodetectors' light-sensitive areas, there are two amplifiers (Am and $Am_1$) directed towards the $t_x$ and $t_y$ times meter for a comparison with the laser start impulses and the standard electronic clock in order to calculate the $\tau$ time, determined by the presence of a possible $\omega$ rotation. The value processed by EL is transferred to the D unit and to the $D_p$ indica tor with the numerical display. At the same time, it is also transferred to the CI control block where there is an input device (U), used for collecting compatible signals deriving from inertial auxiliary system to be added with the laser signals, and used, if necessary, for producing corrective signals, through which the position of the container (W) may be changed, by means of the $m_o$ and $m_{o1}$ motors. Then, there is the $M_t$ block, used in order to obtain the real values of $t$ and $t_1$ of the mean route of the crossed laser beams, through which direction and velocity (V) may be calculated, and which are directed to the $EL_1$ data processor and to CI, for a further eventual regulation of the W positioning motors. Part of it goes to the D, device and to the $Dp_1$ display which indicates the absolute velocity (V), and therefore the relative velocity $V_M$ of the mobile in comparison of the starting point motion or of some other necessary pre-fixed reference point motion. Finally, there are two recorders ($R_z$ and $R_{z1}$) which record the data obtained over time in an external storage. In addition, there are the $M_e$ stores, containing the basic reference motion data, permitting the measurements to be carried out, and to be used in order to guide the programmed processing of $\omega$ and V. They represent the basic setting of the meter at the starting point. There are two connection taps which may be used for transmitting outside signals, to eventually operate possible direct control, on commands which can modify the relative trajectory (or $V_M$ speed) or the relative $\omega$ rotation of the mobile. In programming the computer in accordance with the apparent "v" of the laser beam moving inside the container by determining the $\beta$ angle according to the formula $v = V_p \pm K$ ($V_p$ being the starting speed), low measures may be taken within the K span, with K representing the span of velocity values which include the true value of the W velocity unkow $V_M$, without $V_p$, subtracted vectorially, becase it represents the constant share of motion acquired before the start of the mobile (or the share already considered during the setting operations). A few words must now be included to clarify the procedure followed in measuring the time elapsing between the release of impulses from the laser and the arrival of the light at the photodetector, in a continuos form and with intervals of a few dozen picoseconds. Fig. 9 shows two diagrams: "A" represents the light impulses released by the laser, and "B" represents the same impulses received by the photodetector. A codification based, for instance, on the introduction of a time interval $\mu$ without signals followed by a first, stronger impulse ($\mu_1$) divides a sequence of other normal impulses from the following sequence ($A_1$) by $t_1$. The incoming $\mu$ signals may therefore be recognized and related to those released by the laster (z), thus determining the time interval to be measured between the release and the arrival of each of them. With this procedure, therefore, even if the time interval is rather long, let us say some dozen milliseconds, (which depends on the length of the mirrors and the distance between them, (namely $\ell$ and L) it is not necessary to wait so long before emitting new light impulses. They may be emitted continuously, thereby obtaining new measures in an equally continuous fashion. Obviously, it will always be the task of the computer to follow carefully, through the signals received, the codified sequences of light signals and to determine $t_1$ through the common processes currently employed by modern computers. The optical and electronic system shown in fig. 4 may be dobled or tripled and oriented along two or three orthogonal planes. It may be placed in the vehicle's barycentre, thus obtaining simultaneously all the data necessary to determine direction, travelling speed and rotation speed without having to move the optical instrument with respect to M, as was already underlined in the former patents. In this case, the whole computer system will have to be enlarged to enable it to interpolate the data of the three indicators, thus obtaining the real movements of the mobile, projected onto the x, y and z planes, form another location taken as a reference point with a preliminary setting. As an alternative to the parallel flat mirrors, would be possible to use a cylinder with an entirely reflecting interior surface, to aovid possible interferences on the time values reading caused by rotations. If, on the contrary, such interferences must be considered, usefull, the most advisable system is the one with opposite and parallel flat mirrors, also chosen for V measurements. A small-sized instrument with three coordinates (x, y and z) is described in fig. 10, represetning a cubic container (W), where three measurement systems (a, b and c) are installed like described in fig. 4. All the six internal faces of the cube are reflecting. In front of the faces $a_1$, $b_1$ and c e located the laser z, $z_1$ and $z_2$, with the crystals f, $f_1$ and $f_2$ for the change of wave length ($\lambda$) and the reflecting prisms g, $f_1$ and $g_2$ for the division of the light beams which enter the cube through the treated surface points P, $P_1$, $P_2$, $P_3$, $P_4$ and $P_5$ in order to prevent the beam dividing heads from covering the reflecting surface of the mirrors in the important sites defined as S, $S_1$ and $S_2$. The lasers' wavelength are differentiated. For instance, the $\lambda$ value is taken to 600 nm in z, 400 nm in $z_1$ and 300 nm in $z_2$ in order to avoid interference between the data obtained simultaneously with the three optical systems oriented along the three orthogonal planes. On the internal faces $a_2$, $b_2$ and $C_2$ are located the photosensors L, $L_1$ and $L_2$ which select the respective $\lambda$ coming from the opposite faces. Such photosensors are located slightly below the reflecting surface of the mirrors. These surfaces, however, only allow the passage of the wavelength of any single optical beam, because a $\lambda$ light selection system is adopted. Obviously, photosensors are double, and may select the beams coming from two opposite directions (d and $d_1$) as shown in fig. 8. The lasers' electrical supply system is synchronized in order to have the same short impulse for all the three lasers (see fig. 9). Clearly, the coordination of the analysis, processing and calculation of the final data on the basis of a pre-fixed initial situation will have to be different from the one described above. Along side the complex data-collection system described above (see H, fig. 7), two further computer complexes (fig. 13) will have to be added in order to interpolate from the three united systems all the data regarding the possible rotations, the prevailing directions and the final and corrected resulting speed, without resorting to any movement of the cube, neither in relation with the external situation nor in relation with the vehicle. The result of this cubic structure is a compact instruments, with little size and weight without any auxilia ry motor. When used for some particular purposes its side length may be of less than 0.2 metres, or even less. Inside the cube, the light is only reflected by a small portion (k) of the central areas of the faces (u), which are the only parts of the surface that must be polished. Thanks to the limited need for precision work, therefore, the cost of this section of the instrument, which might be defined as "motion spatial sensor" (s.s.m.), would be much lower than that of the previous instruments. In this case, the container (W) may be metallic and strong, and it may contain only limited reflection areas and the other thin sectors where photosensors and their $\lambda$ filters are installed. The semiconductor lasers, equipped with the optical device for the formation of a thin beam, and their $\lambda$ transformers and beam-dividing reflecting prisms or equivalent dichroic mirrors, are located outside the cubic container (W), and they may also be grouped in a single rigid mounting, fixed as indicated in fig. 10, so that it may be inclined; and equipped with a micrometer through which the penetration of light rays into the cubic container may be accurately regulated. All the elements contained inside this mounting frame for the adjustment of light rays must also be properly adjustable, that is, after regulation they must be fixed permanently. The penetration of the laser beams into the cube through the established points of its faces is made easier by the resort to a light-fast, transparent material (see fig. 10 and 12). The internal part of the beam which is refracted is inclined according to the $\beta$ value, thus creating the reflections necessary for our measurements. The system, therefore, has become a speed meter which can also indicate the direction of the motion and the rotations and transversal oscillations in a completely static way in respect to the mobile. For this reason, and considering its very low weight and its little overall dimensions, it may very easily be installed on any type of vehicle. As fig. 10 shows, the vector (V) may be calculated in its projections on the x, y and z planes through the measurement of times in the three optical circuits of the respective orthogonal planes, and it may then be compared with any other x, y and z vector calculated as a primary reference at the beginning of a given motion or with a calibration calculated on the basis of the principle of the constant speed of light and of its unchanging direction of propagation, a principle which is valid in any portion of space. If there is only one optical system, as shown in fig. 2 or 4, the wavelength of the r and $r_1$ laser beams may be changed one from the other by means of two plate glasses (f), after reflection on the way out of the prisms (g). The distinction between them at the adjacent, electrically divided double photodetector may be carried out by two transparent filters for the two different transformed wavelenghts of r and $r_1$. The optical system formed by parallel, flat, reflecting mirrors, arranged in opposite pairs forming regular geometrical figures, or by a hollow cylinder with reflecting internal walls, might perhaps be replaced by solid, liquid or gaseous transparent materials with a high index of refraction. However, even though such replacement might appear prospectively advantageous, Fresnel's entrainment of light effect, must be taken into account to interpret correctly the time values obtained and modify the calculations ac cordingly. In a vacuum this is not necessary: the t, $t_1$ or T values directly indicate the degree of movement of the vehicle at the time of measurement. The advantage of using solid, liquid or gaseous materials might be, for instance, the reduction in the light propagation velocity within the system, and the consequent smaller size of the latter.

With such materials, calculations become more complex, since the velocity of light inside the system changes ($c_1 = \frac{c}{n}$). When there is also a movement in space at V speed, the resulting formula is $c_1 = \frac{c}{n} + V(1 - \frac{1}{n_2})$ and consequently v becomes $v_1 = c_1$. tg.$\beta$, which, unfortunately, varies according to the value of V during measurement. Therefore,

$$V_1 = \frac{c(t_1 - t)\ \mathrm{tg}\beta}{t_1 + t}$$

must be changed, for instance, into

$$V = \frac{\frac{c}{n} + V(1 - \frac{-}{n})(2t_1 - T)\ \mathrm{tg}\beta}{T}$$

with $t_1 - t = 2t_1 - T$ and $t_1 + t = T$, extracting the real V from this expression. However, this is not sufficient to achieve an accurate measurement, since within solid, liquid or gaseous transparent bodies the reflected beams undergo an entrainment effect on light which is difficult to foresee, though it undoubtedly depends on the materials used. Moreover, transversal rotations might be detected and measured with an optical system based on liquid, solid or gaseous materials as well as with the vacuum system described above, though with a different degree of precision. Any description contained in the present patent application, is given by way of example and is not binding in any way, since the measuring instrument resulting from the application of the abovementioned device might require various adjustments regarding the shape and arrangement of its components, without, however, deviating from the main characteristic of the system described and claimed in the present application and in the other two applications mentioned herewith.

**Claims**

1) Invention defined as "Improvements of the optical-elettronic system for determination of direction and speed of a vehicle by emission of an internal laser beam and for contemporaneous measurement of transversal rotations" covered by the patent applications nr. 9/82810 A/84 submitted on Sept. 19th, 1984 and nr. 9/82809 A/86 submitted on May 27th, 1986 to U.P.-I.C.A., Trieste, by Mr. UGO Licinio, resident in Trieste, 25, via Valdirivo.

2) Invention defined as "Improvements etc." (see item 1 above) characterized by the fact that in the version with two simultaneous emissions of laser light, lasers are not located at the centre of the optical device container, with their beams directed towards the opposite sides of the container, but they are located on such two opposite sides, with each beam travelling, with the usual reflections, towards the opposite side, where a light-sensitive area is located. Such beams travel in opposite directions, and each of them runs parallel to the direction of the motion to be measured. Therefore, it is constantly possible to measure the time taken by light in crossing the whole container in the two opposite directions.

3) Invention defined as "Improvements etc." (see items 1 and 2 above), characterized by the fact that in order to have a rapid sequence of measurements taken at intervals shorter than the time taken by the light impulses to travel from the laser to the photodetector, a periodic codification of the sets of such light impulses is carried out, with different light intensities and with intervals including a group of impulses, so that clear differences may be observed in the electric signals collected by the photodetector to be send to the computer.

4) Invention defined as "Improvements etc." (see items 1, 2 and 3 above), characterized by the fact that in the optical system used for speed measurement a beam dividing head is located in front of the laser light source in order to produce two equal beams that run in opposite, transverse directions, along two symmetrical paths crossing each other, between the reflecting flat mirrors, all of which eanbles to use the optical system for the determination of the speed of a vehicle also for the determination of the contemporaneous detection and measurement of any transversal rotations.

5) Invention defined as "Improvement etc." (see items 1, 2, 3 and 4 above), characterized by the fact that, in order to discover the direction of the instrument's rotation, the photosensitive area, located on the opposite side of the laser light source, is divided into two parts, electrically isolated from each other, each of which may detect only one of the two beams (r and $r_1$) which come from opposite directions, namely the one with a compatible inclination.

6) Invention defined as "Improvements etc." (see items 1, 2, 3, 4 and 5 above), characterized by the fact that also with laser beams sources located at the centre of the container, the beams directed towards the opposite sides may be divided into two equal parts, with transversally circulating rays, as indicated in claim nr. 4, reflected between parallel flat mirrors. In this case too, the aim is a contemporaneous measurement of the travelling speed and all possible transversal rotations or oscillations of the instrument and of the vehicle on which it is installed.

7) Invention defined as "Improvements etc." (see items 1, 2, 3, 4 and 5 above), characterized by the fact that three equal optical systems may also be grouped in a single cubic container with internal vacuum, the six sides of which are reflecting internally, and which is supplied with three laser sources, with three different wavelengths (which may also be obtained by means of a crystal-based transformation device) and three corresponding photodetecting areas. Each of these is sensitive to the wavelenghth of the respective conjugate light beam, and they are all located under a thin layer of their respective mirrors, with the upper sides, being transparent, only with respect to the wavelength related to the optical system of their respective plane (x, y or z). The final objective is

the creation of a compact, strong and light instrument which may be applied on any vehicle to determine its direction and speed and detect its rotations and oscillations without any motion displacement from the vehicle itself.

8) Invention defined as "Improvements etc." (see items 1, 2, 3, 4, 5, and 6 above), characterized by the fact that, in some cases only, the pairs of opposite, parallel flat mirrors forming the reflecting system with a regular geometrical figure shape, may be replaced with an optical system with a reflecting, cylindrical internal surface in order to reduce to negligible values all the influences of possible very intense or quick transversal rotations on the speed meter device.

9) Invention defined as "Improvements etc." (see item 1, 2, 3, 4, 5, 6, 7, and 8 above), characterized by the fact that in the optical system's reflecting mirrors container the vaccum may be replaced with solid, liquid or gaseous transparent ma terial with a known index of refraction, so that the size may be reduced, in all cases when less precise measurements may be required.

10) Invention defined as "Improvements etc." (see items 1, 2, 3, 4, 5, 6, 7, 8 and 9 above), characterized by the fact that the semiconductor laser, or a corresponding type, used in order to produce light impulses may be located with all its attachments at a considerable distance from the container in which the parallel flat mirrors which produce the reflections are installed. This is made possible by making the areas of the mirrors and the inside walls through which the light penetrates transparent by means of refrating areas and plates, which may favour the passage of light without affecting its composition and with an inclination that enables it to reach the flat mirrors with the pre-fixed reflection angle.

11) Invention defined as "Improvements etc." (see items 1, 2, 3, 4, 5, 6, 7, 8, 9, and 10 above), characterized by the fact that, in order to reduce the mirrors' working costs, the reflecting surfaces of the opposite parallel planes may be limited to very small central areas. Their size will be proportional to the possible values of rotation speed or, if the instrument must be used for measurements in the three planes of space without any motion of its own, that is, in a perfectly static state, with the body of the vehicle it will b3 proportional to both rotation speed and travelling speed.

TAB. 1

0286598

TAB. 2

0286598

## Fig.6

## Fig.7

## Fig.8

TAB.3

0286598

Fig.9

Fig.10

Fig.11

Fig.12

Fig.13